# EUROPÄISCHE PATENTSCHRIFT

(11) **EP 3 254 894 B1**
(45) Veröffentlichungstag und Bekanntmachung des Hinweises auf die Patenterteilung: **06.11.2019**
(21) Anmeldenummer: 17000542.5
(22) Anmeldetag: 31.03.2017
(51) Int. Cl.: B60P 3/42, B60N 2/30, B60N 2/24, B60N 2/832

(54) **NUTZRAUMKABINE EINES KRAFTFAHRZEUGES**
USABLE SPACE CABIN OF A MOTOR VEHICLE
CABINE DE VÉHICULE AUTOMOBILE

(30) Priorität: 09.06.2016 CH 7392016
(43) Veröffentlichungstag der Anmeldung: 13.12.2017
(73) Patentinhaber: General Dynamics European Land Systems - Mowag GmbH, 8280 Kreuzlingen (CH)
(72) Erfinder: Mildner, Lars, 8585 Mattwil (CH); Schäffer, Csaba, 8280 Kreuzlingen (CH); Merz, Lukas, 8505 Pfyn (CH)
(74) Vertreter: BSB Patentanwälte Schütte & Engelen Partnerschaft mbB

(56) Entgegenhaltungen:
- DE-A1- 2 842 093
- US-A- 2 324 508
- US-A- 3 833 253
- US-A- 4 005 898

## Beschreibung

Die Erfindung betrifft eine Nutzraumkabine eines Kraftfahrzeuges für den Mannschafts- und Materialtransport, mit einem für eine abnehmbare Kabinenhülle bestimmten, durch Längs- und Querbalken gebildeten Kabinenrahmen und mit einem Kabineninnenausbau, der zwei in Fahrtrichtung einander gegenüber und seitlich oberhalb eines zentralen Fahrzeugbodens verlaufende Sitzreihen hat, mit Sitzbankplatten und Rückenlehnen, die über eine erste Schwenkachse miteinander verbunden sind, wobei die Sitzbankplatten zusammen mit den Rückenlehnen, eine Ladefläche bildend, um eine zweite Schwenkachse nach innen schwenkbar sind, so dass die Nutzraumkabine in einen auch seitlich zugänglichen Laderaum wandelbar ist.

Eine Nutzraumkabine dieser Art ist bekannt durch die US4005898 oder ältere, die Bezeichnung MOWAG DURO 1 tragenden Militärfahrzeugen der Anmelderin, aus einer Zeit als für den Mannschaftstransport eine Sitzbank und eine in ihrer Höhe schmale, sich an einer seitlichen Ladeklappe abstützende Rückenlehne akzeptiert werden konnte. Eine solche Nutzraumkabine hat anderseits den Vorteil, dass sie nach Umklappen ihrer Sitzbänke zu einer Ladefläche und Absenken ihrer seitlichen Ladeklappen auf einfache Weise z.B. mittels Gabelstaplern von zwei Seiten her beladen werden kann.

Bei einer neueren, durch WIKIPEDIA als MOWAG DURO IIIP bekannten Ausführung einer Nutzraumkabine der Anmelderin musste im Interesse eines Insassenschutzes auf diesen Vorteil verzichtet werden. Für den Materialtransport sind zwar zur Ausbildung einer Ladefläche Einzelsitzkörper gegen die Kabinenseitenwand aufschwenkbar und dort arretierbar, dadurch ergibt sich jedoch nur ein unebener, seitlich geschlossener und somit nur vom Fahrzeugende aus zugänglicher Laderaum.

Für Zivilfahrzeuge ist es ausserdem allgemein bekannt, dass eine Sitzrückenlehne zur Bildung einer Ladefläche nach vorn schwenkbar ist. Beispiele hierzu zeigen die US20110148146, die WO9917953, die DE102004041734 oder die WO9947378.

Der Erfindung liegt die Aufgabe zugrunde, eine Nutzraumkabine entsprechend dem einleitenden Teil des Patentanspruchs 1 und somit dem Vorteil auch seitlicher Ladefähigkeit, so auszubilden, dass ein Mannschaftstransport mit hohem Sitzkomfort und hoher Sicherheit gewährleistet ist. Die Lösung dieser Aufgabe erfolgt erfindungsgemäss aufgrund der kennzeichnenden Merkmale des Patentanspruchs 1. Vorteilhafte Ausgestaltungen der Erfindung sind Gegenstand der abhängigen Patentansprüche.

Im Folgenden wird die Erfindung anhand eines in Zeichnungen dargestellten Ausführungsbeispieles näher erläutert. Es zeigt:
Fig. 1 eine perspektivische, durch Weglassung u.a. von Sitzgurten vereinfachte Darstellung einer Nutzraumkabine mit ihrer Anordnung von Einzelsitzplätzen und mit eine Ladefläche bildender, eingeklappter Position ihrer Einzelsitzplätze, vor Abklappen seitlicher Ladeklappen und Entfernung von mittleren, seitlichen Gerüstbalken,
Fig. 2 eine Querschnittsdarstellung eines Hakeneingriffs am oberen Ende eines Vertikalbalkens der Nutzraumkabine,
Fig. 3 eine perspektivische Teildarstellung im Verriegelungsbereich zwischen einem Vertikalbalken und einem Seitenbalken der Nutzraumkabine nach Fig.1, in einer Anfangsphase einer Eingriffsbewegung
Fig. 4 einen Vertikalschnitt zum Verriegelungsbereich nach Fig. 3,
Fig. 5 eine Darstellung entsprechend Fig. 3 in einer Endphase der Verriegelung,
Fig. 6 einen Vertikalschnitt zum Verriegelungsbereich nach Fig.5,
Fig. 7 eine Vorderansicht im zur Verriegelung bestimmten Endbereich eines Seitenbalkens der Nutzraumkabine nach Fig.1,
Fig. 8 eine Detailansicht im Bereich einer Nockenaufnahme nach Fig. 3 oder Fig. 4,
Fig. 9 einen Vertikalschnitt im Eingriffsbereich zwischen Verriegelungsnocken und der Nockenaufnahme nach Fig. 8,
Fig. 10 eine schematische perspektivische Darstellung der Nutzraumkabine mit zwei Reihen von Sitzeinheiten in Gebrauchsposition und in vereinfachter Darstellung
Fig. 11 eine Vorderansicht von zwei Sitzen einer Sitzreihe nach Fig.10,
Fig. 12 eine Querschnittsdarstellung der Nutzraumkabine mit angegurteten Insassen,
Fig. 13 einen Querschnitt durch eine Sitzeinheit nach Fig.12 mit einer abgesenkten Rückenlehne,
Fig. 14 einen Querschnitt durch die Sitzeinheit nach Fig. 13 mit einer nach vorn geklappten Zwischenposition der Rückenlehne,
Fig.15 einen Querschnitt durch die Sitzeinheit nach Fig. 13 und Fig. 14 in einer eine Ladefläche bildenden Endposition einer Klappbewegung und
Fig.16 eine rückseitige Ansicht einer Gruppe von Sitzeinheiten der Sitzreihen nach Fig.10.

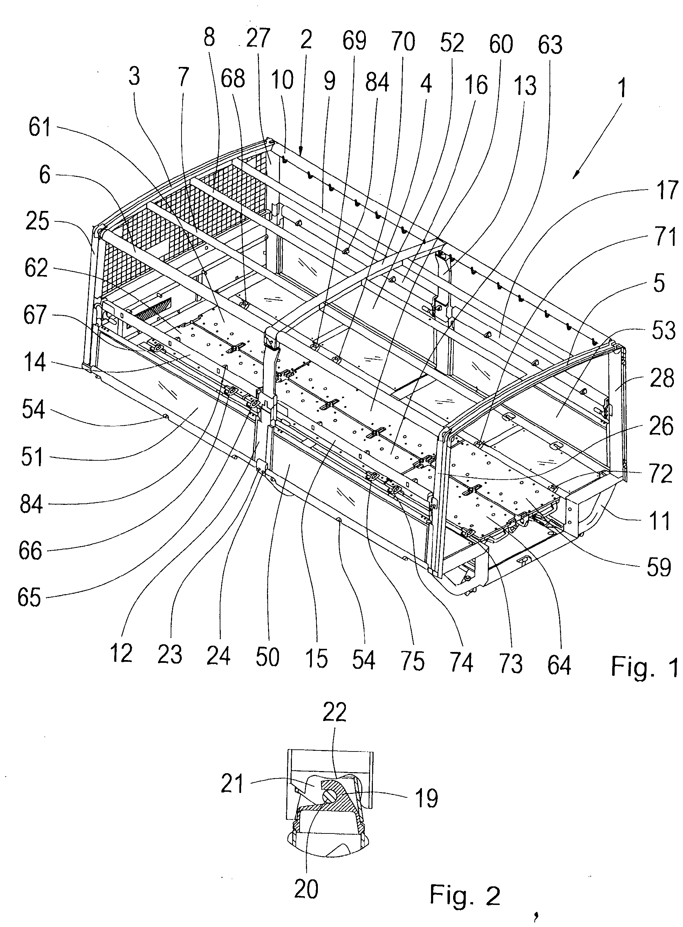

Entsprechend der Darstellung in Fig.2 hat die Nutzraumkabine 1 einen Kabinenrahmen 2 mit einem querverlaufenden Vorderrahmen 3, einem Mittelrahmen 4 und einem Endrahmen 5, die über durchlaufend längs verlaufende Dachbalken 6 bis 10 und einen, für die Befestigung am Fahrgestell eines Kraftfahrzeuges bestimmten Bodenrahmen 11 z.B. durch Verschweissung starr miteinander verbunden sind.

Gegenüber vorbekannten Nutzraumkabinen der eingangs genannten Art geben neuartige, lösbar verankerte seitliche Vertikalbalken 12, 13 des Mittelrahmens 4 zusammen mit an diesen lösbar verankerten, längsverlaufenden Seitenbalken 14 bis 17 dem Kabinenrahmen 2, auch im Geländeeinsatz mit Kipp- und Überrollgefahr, die erforderliche Festigkeit und Formsteifigkeit, um auch die Trägheitskräfte aufnehmen zu können, die über im Folgenden beschriebene, neuartige, Sicherheitsgurte aufweisende Sitzeinheiten 18 eingeleitet werden können.

Zum Einsetzen und Verriegeln der seitlichen Vertikalbalken 12, 13 in den Kabinenrahmen 2 haben diese, entsprechend der Darstellung in Fig.2, endseitig einen Eingriffshaken 19. Diese Eingriffshaken 19 sind jeweils über einen Rundbolzen 20 einer Hakenaufnahme 21 formschlüssig eingehakt, die am jeweiligen Dachbalken 6, 10 des Kabinenrahmens 2 mittelseitig vorgesehen sind. Dabei ergibt sich beim seitlichen Einschwenken des Vertikalbalkens 12, 13 in die Hakenaufnahme 21 aufgrund der Dimensionierung des Eingriffshakens 19 und der Formgebung einer Innenprofilierung 22 der Hakenaufnahme 21, eine form- und kraftschlüssige Verriegelung. Das untere Ende der Vertikalbalken 12, 13 ist mittels Schrauben 23, 24 am Bodenrahmen 11 lösbar befestigt.

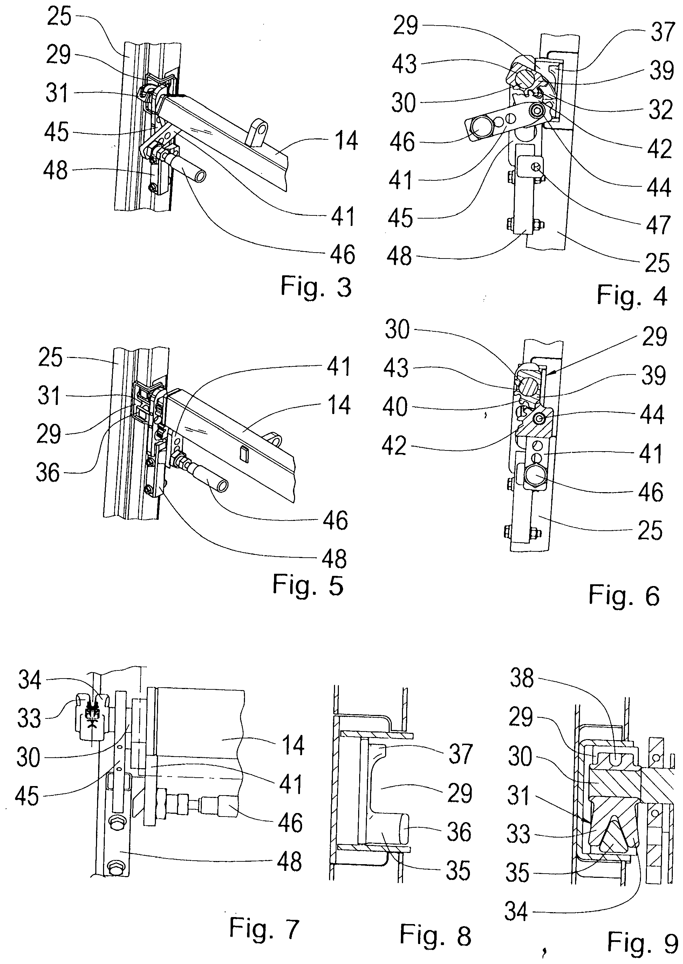

Für die lösbare aber rüttelfeste Verriegelung der längsverlaufenden, der Halterung von Sitzeinheiten 18 dienenden Seitenbalken 14 bis 17, ist in den mittleren seitlichen Vertikalbalken 12, 13 und in den Vertikalbalken 25 bis 28 der Rahmen 3 bis 5 jeweils eine in den Fig. 3 bis 6 und Fig. 8 und 9 dargestellte Nockenaufnahme 29 vorgesehen. Diese dient dem form- und kraftschlüssigen Eingriff eines endseitig auf einem Achszapfen 30 der Seitenbalken 14 bis 17 jeweils vorgesehenen Verriegelungsnockens 31.

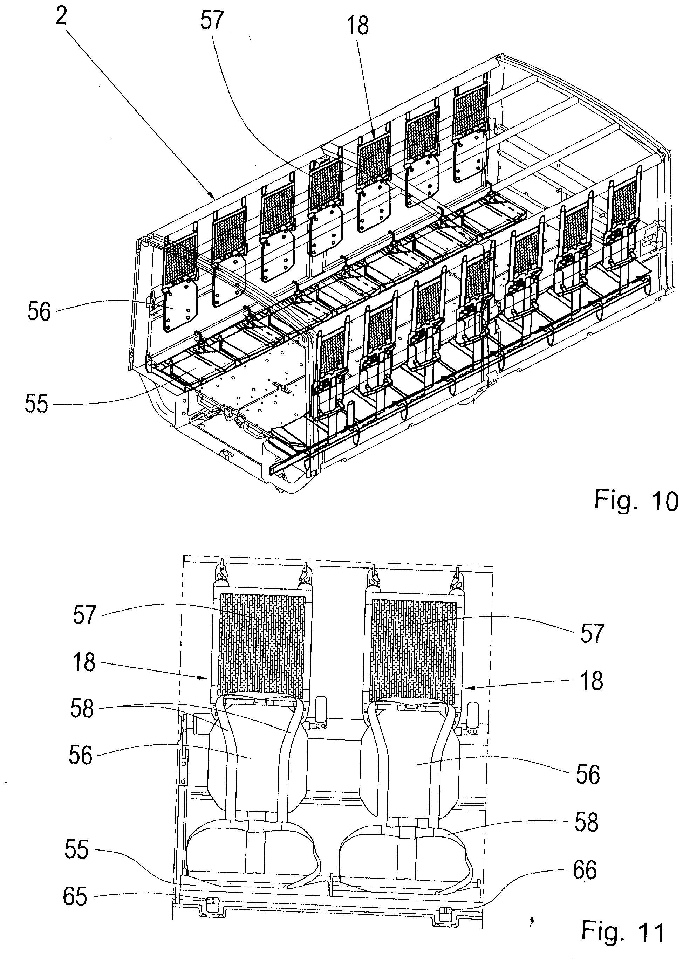

Für die Herstellung des form- und kraftschlüssigen Eingriffs der endseitigen, in den Fig. 3 bis 5, Fig. 8 und 10 dargestellten Verriegelungsnocken 31 der Seitenbalken 14 bis 17 in einer Nockenaufnahme 29 haben diese entsprechend den Darstellungen in Fig. 8 und Fig.10 an ihrer in Eingriffsposition unteren Seite eine v-förmige Gabelung 32, die mit ihren beiden Schenkeln 33, 34, entsprechend der Darstellung in Fig. 10, auf einem Rastkeil 35 der Nockenaufnahme 29 reiterartig aufsitzt. Ausserdem ist der Rastkeil 35 nach aussen durch einen in Fig.5 und Fig. 9 sichtbaren Quersteg 36 begrenzt, so dass der gegabelte Verriegelungsnocken 31 hinter diesem in die Nockenaufnahme 29 eingreift.

Ein weiterer form- und kraftschlüssiger Eingriff des Verriegelungsnockens 31 in der Nockenaufnahme 29 erfolgt zwischen einem oberhalb des Rastkeils 35 in der Nockenaufnahme 29 vorgesehenen Rastblock 37 und einer seiner Form angepassten Rastausnehmung 38 des Verriegelungsnockens 31.

Bei der Herstellung des form- und kraftschlüssige Eingriffs des Verriegelungsnockens 31, in die auf die zuvor beschrieben Weise innen profilierten Nockenaufnahme 29, ist nach seiner seitlichen Einführung in die Nockenaufnahme 29 eine Drehbewegung um die Längsachse des zugehörigen Seitenbalkens 14 bis 17 erforderlich. Die Darstellung nach Fig. 3 zeigt hierzu die anfängliche, zurückgeschwenkte Winkelposition des zu verriegelnden Seitenbalkens 14, während Fig. 5 hierzu die Endposition zeigt.

Um die Verriegelung in der Nockenaufnahme 29 zu sichern, ist zwischen dem Verriegelungsnocken 31 und dem Ende des Seitenbalkens 14 auf dem Achszapfen 30 ein erster Zahnradsektor 39 mit einer exzentrischen Zahnreihe 40 vorgesehen, der sich in Zahneingriff mit einem an einem Sicherungshebel 41 endseitig drehfest gesicherten zweiten, ebenfalls exzentrischen Zahnradsektor 42 befindet. Dabei erfolgt die Drehlagerung des Sicherungshebels 41 und die Drehlagerung des Seitenbalkens 14 in Lagerbohrungen 43, 44 eines gemeinsamen Flacheisens 45.

Durch Einschwenken des Sicherungshebels 41 von der seitlich abstehenden Position nach Fig. 4 in eine untere, parallel zu dem Flacheisen 45 verlaufende Position entsprechend der Darstellung in Fig. 6 ergibt sich aufgrund der Exzentrizität des genannten Zahneingriffs der Zahnradsektoren 39 und 42 eine rüttelfeste Verspannung, die einer Rückdrehung des Seitenbalkens 14 und dabei Freigabe des Nockeneingriffs innerhalb der Nockenaufnahme entgegen wirkt.

Für eine weitere Sicherung der Eingriffsposition des Seitenbalkens 14 hat der Sicherungshebel 41 handkurbelartig einen axial verschiebbaren Griff 46, so dass ein nichtdargestellter endseitiger Griffzapfen in einer Öffnung 47 eines mit dem Flacheisen 45 z.B. durch Schweissen fest verbundenen Stabprofils 48, eine diese Sicherung gewährleistende Eingriffsposition findet.

Vorzugsweise verbindet das Stabprofil 48 den Seitenbalken 14 mit einer für Lastkraftfahrzeuge üblichen seitlichen Ladeklappe 50 bis 53, so dass sie zum Öffnen der Nutzraumkabine 1 gemeinsam um untere Scharniergelenke 54 nach unten geschwenkt werden können.

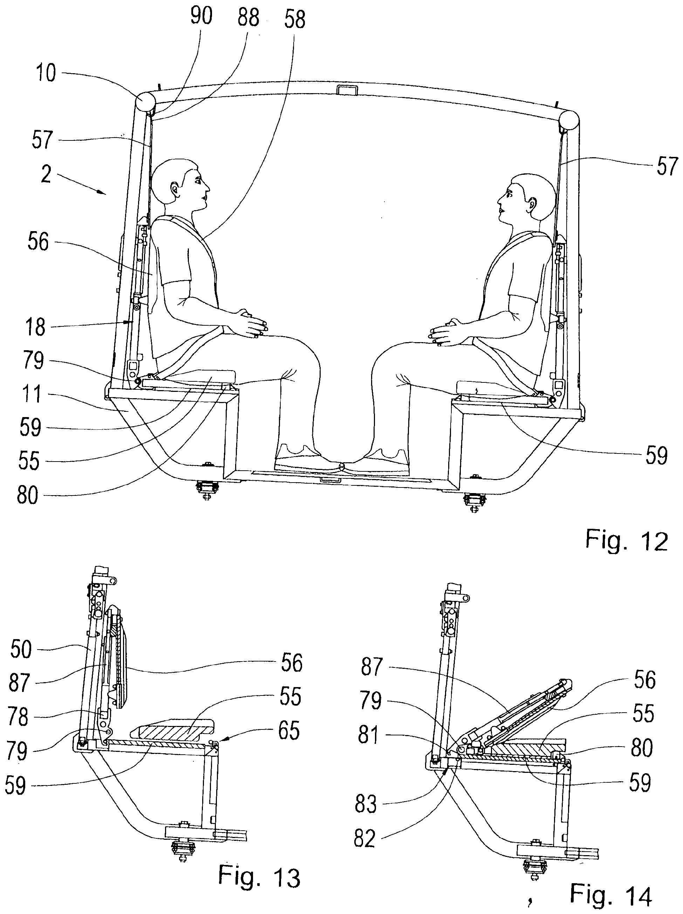

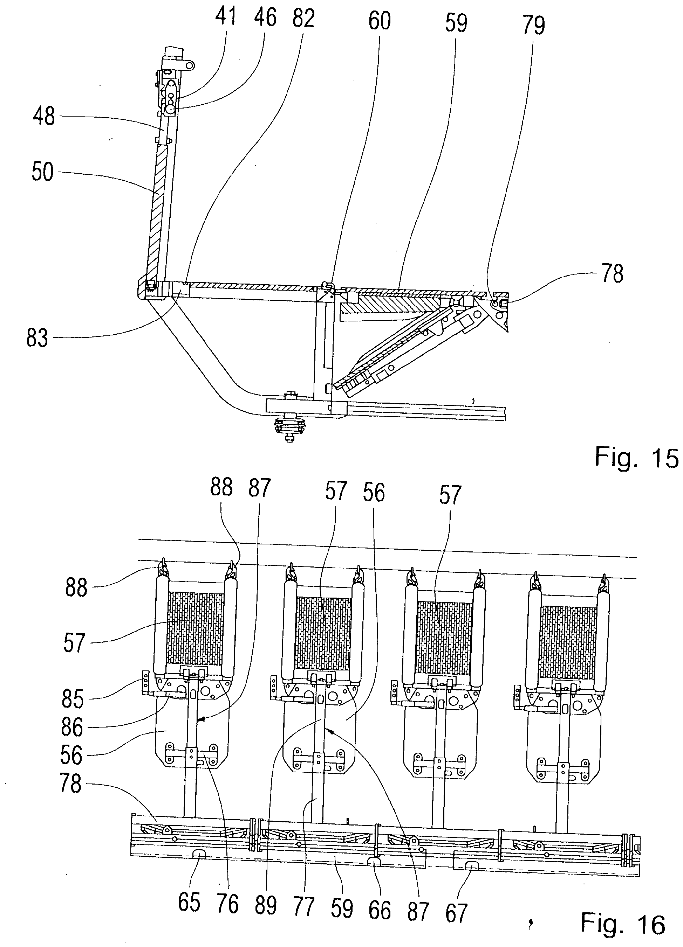

Um die Nutzraumkabine 1, ausgehend vom Zustand mit in Gebrauchsposition nach Fig. 10 angeordneten Sitzeinheiten 18, in einen für einen Materialtransport geeigneten Zustand entsprechen der Darstellung in Fig. 1 wandeln zu können, sind die mit einem gepolsterten Sitzkörper 55, einer Rückenlehne 56 und einer Kopflehne 57 ausgerüsteten und ausserdem Dreipunkt-Sicherheitsgurte 58 aufweisenden Sitzeinheiten 18, ausgehend von ihrer Position nach Fig.12 in mehreren Phasen bis in eine Position nach Fig. 15 verstellbar.

Um dabei eine ebene Ladefläche entsprechend der Darstellung in Fig. 1 zu erzielen, ebenso wie eine einfache Handhabung, sind die Sitzkörper 55 der Sitzeinheiten 18 jeweils mit mindestens einer benachbarten Sitzeinheit 18 auf einer gemeinsamen Sitzbankplatte 59 bis 64 befestigt. Diese Sitzbankplatten 59 bis 64 haben jeweils an ihrer der Kabinenmitte zugekehrten Vorderkante Scharniere 65 bis 75 (Fig.1), so dass sie zusammen mit den ihnen zugehörigen Sitzeinheiten 18, um die Scharnierachsen derart einwärts schwenkbar sind, dass sie die in den Darstellungen der Fig.1 und Fig. 15 gezeigte ebene Ladefläche bilden.

Damit dieses Einwärtsschwenken der Sitzbankplatten 59 bis 64 zusammen mit den im Wesentlichen aus Sitzkörper 55, Rückenlehne 56, Sitzgurten 57 und Kopflehne 58 bestehenden Sitzeinheiten 18 möglich ist, sind diese, ausgehend von der Position nach Fig. 11 oder Fig. 12, bis in die Position nach Fig. 14 und folglich auch in die Endposition nach Fig. 15 oder Fig.1 verstellbar.

Diese Verstellungen der genannten Elemente 55 bis 58 der Sitzeinheiten 18 wird durch deren im Folgenden beschriebene Ausführung und eine lösbare Befestigung am Kabinenrahmen 2 ermöglicht.

Entsprechend den Darstellungen in Fig. 16 ist jede Rückenlehne 56 u.a. über eine Querstrebe 76 an einem T-förmigen Lehnenhalter 77 befestigt, dessen Querbalken 78 über eine Achse 79, mit einem Sitzkörperrahmen 80 verbunden ist. An beiden Enden der Querbalken 78 ist jeweils ein Rasthaken 81 vorgesehen, der sich in Eingriff mit einem Rastbolzen 82 befindet, der in einer nichtdargestellten Aussparung eines bodenseitigen Balkens 83 des Kabinenrahmens 2 vorgesehen ist.

Zusätzlich sind die Lehnenhalter 77 und somit die Rückenlehnen 56 lösbar an den Seitenbalken 14 bis 17 des Kabinenrahmens 2 verankert. Hierzu ist an den Seitenbalken 14 bis 17 für jeden Lehnenhalter 77 jeweils eine Befestigungslasche 84 angeschweisst, in deren Lochaufnahme ein am Lehnenhalter 77 geführter, mittels eines Handgriffs 85 betätigbarer Schieberiegel 86 eingreift.

Weiterhin hat der Lehnenhalter eine Absenkmechanik, indem der Vertikalbalken 87 des T-förmige Lehnenhalters 77 als im Querschnitt vierkantiges Teleskoprohr ausgeführt ist. Diese Absenkmechanik ermöglicht nach Verschieben des Schieberiegels 86 und damit Lösen der Befestigung der betreffenden Rückenlehne 56 am Kabinenrahmen 2, ausgehend von der Gebrauchsposition nach Fig. 12, deren Absenkung in eine Position nach Fig. 13, aus der sie sich zusammen mit dem Sitzkörper 50 bis in die eine Ladefläche bildende Position nach Fig. 15 umklappen lässt. Durch diese Umklappbewegung um die Achse 79 lösst sich selbsttätig auch der Eingriff des Rasthakens 81 mit dem Rastbolzen 82 des bodenseitigen Balkens 83 des Kabinenrahmens 2.

Um die Umklappbewegung der Sitzeinheiten 18 aus deren Position nach Fig. 13 bis in die Position nach Fig. 15 zu ermöglichen, sind die Kopflehnen 57 der Sitzeinheiten 18 in Form einer Matte an einem äusseren längsverlaufenden Dachbalken 6, 10 hängend befestigt und ausserdem mit dem oberen Bereich einer zugehörigen Rückenlehne 56 verbunden. Folglich lassen sie sich nach Lösen ihrer Befestigung auf die zugehörige Rückenlehne 56 raumsparend herunterklappen, so dass sie die beschriebene Klappbewegung der Sitzeinheiten 18 zur Bildung einer Ladefläche nicht behindern. In heruntergeklappter Position sind sie ausserdem geeignet, um die Sitzgurte taschenförmig zu überdecken. Ihre Abbildung in heruntergeklappter, eine Tasche bildenden Position wurde zur Vereinfachung der Darstellung der Sitzeinheiten 18 in den Zeichnungen vermieden.

Die hängende Befestigung erfolgt beispielsweise mittels eines Paares von Haken 88 der mattenförmigen Kopflehnen 57, die in an den Dachbalken 6, 10 angeschweissten Drahtschlaufen 90 eingehängt sind.

Vorzugsweise ist die Absenkautomatik zweistufig ausgeführt, indem das Innenrohr 89 des Vertikalbalkens 87 in einer Zwischenposition verrastbar ist. In einer somit möglichen Vorstufe der Absenkung bis in die Position nach Fig. 13 hat die Rückenlehne 56 eine für die taschenförmige Befestigung der heruntergeklappten Kopflehne 57 vorteilhafte Zugriffsposition.

## Patentansprüche

1. Nutzraumkabine eines Kraftfahrzeuges für den Mannschafts- und Materialtransport, mit einem für eine abnehmbare Kabinenhülle bestimmten, durch Längsbalken (6 - 10, 14 - 17) und Querbalken (3 - 5) gebildeten Kabinenrahmen (2) und mit einem Kabineninnenausbau, der zwei in Fahrtrichtung einander gegenüber und seitlich oberhalb eines zentralen Fahrzeugbodens verlaufende Sitzreihen hat, mit Sitzbankplatten (59 - 64) und Rückenlehnen (56), die über eine erste Schwenkachse (79) miteinander verbunden sind, wobei die Sitzbankplatten (59 - 64) zusammen mit den Rückenlehnen (56), eine Ladefläche bildend, um eine zweite Schwenkachse (65 - 75) nach innen schwenkbar sind, so dass die Nutzraumkabine in einen auch seitlich zugänglichen Laderaum wandelbar ist, **dadurch gekennzeichnet, dass** auf den Sitzbankplatten (59 - 64) für jeweils eine Person bestimmte Sitzkörper (55) vorgesehen sind, diesen jeweils eine Rückenlehne (56) mit Sicherheitsgurten (58) und eine Kopflehne (57) zugeordnet ist, jede Rückenlehne (56) mittels einer Absenkmechanik (87) zu dem Sitzkörper (55) hin absenkbar ist und jeweils mit im Kabinenrahmen (2) lösbar verankerten Seitenbalken (14 - 17) verriegelt ist.

2. Nutzraumkabine nach Anspruch 1, **dadurch gekennzeichnet, dass** die Kopflehne (57) als mit der Rückenlehne (56) verbundene Matte ausbildet ist und am Dachbereich des Kabinenrahmens (2) hängend lösbar befestigt ist.

3. Nutzraumkabine nach Anspruche 1 und 2, **dadurch gekennzeichnet, dass** die Absenkmechanik teleskopartig ineinandergreifende Stangenprofile (87) und T-förmig dazu jede Rückenlehne (56) einen bodenseitigen Querbalken (78) aufweist, dessen Enden je einen Rasthaken (81) aufweisen und dass in bodenseitigen Längsbalken (83) des Kabinenrahmens (2) für deren Eingriff bestimmte Ankeröffnungen vorgesehen sind.

4. Nutzraumkabine nach Anspruch 1, **dadurch gekennzeichnet, dass** der Kabinenrahmen (2) in ihm lösbar befestigte Seitenbalken (14-17) aufweist, an denen für jede Rückenlehne (56) eine Befestigungslasche (84) vorgesehen ist und dass an jeder Rückenlehne (56) rückseitig ein für den Eingriff in die Befestigungslasche (84) bestimmter Riegel (86) vorgesehen ist.

5. Nutzraumkabine nach Anspruch 4, **dadurch gekennzeichnet, dass** die Seitenbalken (14-17) endseitig Verriegelungsnocken (31) aufweisen, die sich lösbarem Eingriff in Nockenaufnahmen (29) von lösbaren seitlichen Vertikalbalken (12, 13) eines Mittelrahmens (4) des Kabinenrahmens (2) befinden.

6. Nutzraumkabine nach Anspruch 5, **dadurch gekennzeichnet, dass** die Seitenbalken (14 - 17) mit am Kabinenrahmen (2) schwenkbar befestigten seitlichen Ladeklappen (50 - 53) verbunden sind und zum Eingriff in eine Nockenaufnahme (29), mit ihren endseitigen Verriegelungsnocken (31) um ihre Längsachse drehbar gelagert sind.

7. Nutzraumkabine nach Anspruch 6, **dadurch gekennzeichnet, dass** die Verriegelungsnocken (31) v-förmig gegabelt sind und in Eingriff auf einen Rastkeil (35) der Nockenaufnahme (29) eindrehbar sind.

8. Nutzraumkabine nach den Ansprüchen 5 bis 7, **dadurch gekennzeichnet, dass** an den Seitenbalken (14 - 17) mit diesen achsgleich ein Zahnradsektor (3) mit einer exzentrischen Zahnreihe (40) befestigt ist, der sich in Eingriff mit einem an einem schwenkbaren Sicherungshebel (41) vorgesehenen, zweiten Zahnradsektor (42) befindet, wobei der Sicherungshebel (41) verrastbar ist.

9. Nutzraumkabine nach Anspruch 5, **dadurch gekennzeichnet, dass** am oberen Ende der Vertikalbalken (12,13) eine hakenförmige Eingriffsklaue (19) vorgesehen, die in einer am Dachbalken (6, 10) mittelseitig vorgesehenen Ankeraufnahme (21) form- und kraftschlüssig eingehakt ist und das untere Ende der Vertikalbalken (12, 13) durch mindestens eine Schraubverbindung (23, 24) an bodenseitigen Längsbalken des Kabinenrahmens (2) befestigt ist.

## Claims

1. Transportation cabin of a motor vehicle for personnel and materials transport, including a cabin frame (2) provided for a removable cabin shell and formed by longitudinal beams (6 - 10, 14 - 17) and crossbeams (3 - 5) and having cabin interior fittings including two seat rows arranged opposite one another in the traveling direction and laterally above a central vehicle floor, with seat bench plates (59 - 64) and backrests (56) connected with one another via a first pivot axle (79), the seat bench plates (59 - 64) together with the backrests (56) being pivotable inwardly about a second pivot axle (65 - 75) forming a loading space so that the transportation cabin converts to a cargo hold accessible from the side as well, **characterized in that** the seat bench plates (59 - 64) are provided with seat elements (55) intended for a single person each, to each of which is assigned one backrest (56) with safety belts (58) and a headrest (57), wherein each backrest (56) can be lowered toward the seat element (55) by means of a lowering mechanism (87) and is locked with lateral beams (14 - 17) detachably anchored in the cabin frame (2).

2. The transportation cabin according to claim 1, **characterized in that** the headrest (57) is configured as a mat connected with the backrest (56) and is detachably attached to and hanging from the roof area of the cabin frame (2).

3. The transportation cabin according to claims 1 and 2, **characterized in that** the lowering mechanism comprises telescopic, interlocked rod profiles (87) and in a T-arrangement relative thereto, each of the backrests (56) comprises a floor side crossbeam (78) whose ends show a snap hook (81) each, and that floor-side longitudinal beams (83) of the cabin frame (2) are provided with apertures for the anchors to engage in.

4. The transportation cabin according to claim 1, **characterized in that** the cabin frame (2) includes detachably attached therein, lateral beams (14 - 17) which are provided with one attachment tab (84) for each of the backrests (56) and that the rear of each of the backrests (56) is provided with a bolt (86) for engaging the tab (84).

5. The transportation cabin according to claim 4, **characterized in that** the lateral beams (14 - 17) show locking cams (31) at their ends in detachable engagement with cam accommodations (29) of detachable, lateral vertical beams (12, 13) of a center frame (4) of the cabin frame (2).

6. The transportation cabin according to claim 5, **characterized in that** the lateral beams (14 - 17) are connected with side wall loading boards (50 - 53) pivotally attached to the cabin frame (2) and are supported for rotation about their longitudinal axes by means of their end-mounted locking cams (31) for engagement in a cam accommodation (29).

7. The transportation cabin according to claim 6, **characterized in that** the locking cams (31) show a V-forked configuration and can be screwed in to engage in a locking wedge (35) of the cam accommodation (29).

8. The transportation cabin according to claims 5 to 7, **characterized in that** a toothed segment (3) having an off-center row of teeth (40) is coaxially attached to the lateral beams (14 - 17) being in engagement with a second toothed segment (42) provided on a pivotal safety catch (41), which safety catch (41) is provided for latching.

9. The transportation cabin according to claim 5, **characterized in that** the top end of the vertical beams (12, 13) is provided with a hooked engagement claw (19) that hooks in a form-fit and a force-fit into an anchor accommodation (21) provided centrally on the roof beam (6, 10) and that the bottom end of the vertical beams (12, 13) is fastened by means of at least one screwed connection (23, 24) to floor-side longitudinal beams of the cabin frame (2).

## Revendications

1. Cabine à espace utile d'un véhicule automobile pour le transport d'équipe et de matériel, avec un cadre de cabine (2) destiné à une enveloppe de cabine apte à être retirée et formé par des longerons (6 - 10, 14 - 17) et des traverses (3 - 5), ainsi qu'avec un intérieur de cabine qui comprend deux rangées de sièges s'étendant l'une en face de l'autre dans le sens de marche et latéralement au-dessus d'un fond de véhicule central, avec des panneaux de banquette (59 - 64) et des dossiers (56) qui sont reliés les uns aux autres par un premier axe de pivotement (79), dans laquelle lesdits panneaux de banquette (59 - 64) conjointement avec les dossiers (56), formant une surface de chargement, peuvent pivoter vers l'intérieur autour d'un deuxième axe de pivotement (65 - 75) de sorte que la cabine à espace utile peut être transformée en un espace de chargement accessible également latéralement, **caractérisée par le fait que** sur les panneaux de banquette (59 - 64) sont prévus des corps de siège (55) destinés chacun à une personne, à ceux sont associés respectivement un dossier (56) avec des ceintures de sécurité (58) et un appui-tête (57), que chaque dossier (56) peut être abaissé vers le corps du siège (55) au moyen d'une mécanique d'abaissement (87) et est verrouillé chacun au moyen de barres latérales (14 - 17) ancrées de manière amovible dans le cadre de cabine (2).

2. Cabine à espace utile selon la revendication 1, **caractérisée par le fait que** l'appui-tête (57) est réalisé en tant que tapis relié au dossier (56) et est fixé de manière amovible en étant suspendu au niveau du toit du cadre de cabine (2).

3. Cabine à espace utile selon la revendication 1 et 2, **caractérisée par le fait que** la mécanique d'abaissement présente des profilés de barre (87) s'emboîtant de manière télescopique les uns dans les autres et que, en forme de T par rapport à ceux-ci, chaque dossier (56) présente une traverse (78) côté fond dont les extrémités comprennent chacune un crochet d'arrêt (81), et que des ouvertures d'ancrage sont prévues dans des longerons (83) côté fond du cadre de cabine (2) et sont destinées à l'engagement de ceux-ci.

4. Cabine à espace utile selon la revendication 1, **caractérisée par le fait que** le cadre de cabine (2) comprend des barres latérales (14 - 17) qui sont fixées de manière amovible dans celui-ci et sur lesquelles est prévue une languette de fixation (84) pour chaque dossier (56) et qu'un verrou (86) est prévu sur la face arrière de chaque dossier (56) qui est destiné à s'engager dans ladite languette de fixation (84).

5. Cabine à espace utile selon la revendication 4, **caractérisée par le fait que** les barres latérales (14 - 17) présentent des cames de verrouillage (31) à l'extrémité qui sont à engagement amovible dans des logements de came (29) de barres verticales latérales (12, 13) amovibles d'un cadre central (4) du cadre de cabine (2).

6. Cabine à espace utile selon la revendication 5, **caractérisée par le fait que** les barres latérales (14 - 17) sont reliées à des hayons latéraux (50 - 53) fixés à pivotement sur le cadre de cabine (2), et, pour l'engagement dans un logement de came (29) par leurs cames de verrouillage (31) d'extrémité, elles sont logées à rotation autour de leur axe longitudinal.

7. Cabine à espace utile selon la revendication 6, **caractérisée par le fait que** les cames de verrouillage (31) sont bifurquées en V et peuvent être vissées de manière à être en prise sur un coin d'arrêt (35) du logement de came (29).

8. Cabine à espace utile selon les revendications 5 à 7, **caractérisée par le fait qu'**un secteur de roue dentée (3) ayant une rangée excentrique de dents (40) est fixé sur les barres latérales (14 - 17) en étant coaxiale à celles-ci et est en prise avec un deuxième secteur de roue dentée (42) prévu sur un levier de sécurité (41) pivotant, ledit levier de sécurité (41) pouvant être enclenché.

9. Cabine à espace utile selon la revendication 5, **caractérisée par le fait que**, à l'extrémité supérieure des barres verticales (12, 13), une griffe d'engagement (19) en forme de crochet est prévue qui est accrochée à engagement positif et par adhérence dans un logement d'ancrage (21) prévu côté milieu sur la barre de toit (6, 10), et que l'extrémité inférieure des barres verticales (12, 13) est fixée par au moins une liaison à vis (23, 24) sur des barres longitudinales côté fond du cadre de cabine (2).
